# EUROPEAN PATENT SPECIFICATION

(11) **EP 3 904 092 B1**
(45) Date of publication and mention of the grant of the patent: **19.06.2024**
(21) Application number: 20172051.3
(22) Date of filing: 29.04.2020
(51) Int. Cl.: B32B 27/28, B32B 27/32, B32B 7/10, B32B 7/12, B32B 1/08

(54) **FLEXIBLE REINFORCED MULTILAYER POLYMER PIPE**
FLEXIBLES VERSTÄRKTES MEHRLAGIGES POLYMERROHR
TUYAU DE POLYMÈRE MULTICOUCHE RENFORCÉ FLEXIBLE

(43) Date of publication of application: 03.11.2021
(73) Proprietor: Radius-Kelit Infrastructure Gesellschaft m.b.H., 4300 St. Valentin (AT)
(72) Inventor: GORILOVSKIY, Miron Isaakovich, Moscow, 123060 (RU); SHMELEV,Aleksandr Yuryevich, Moscow, 117353 (RU); SAMOILOV, Sergey Vasilyevich, Moscow, 121596 (RU); SHALYAPIN, Sergey Valeryevich, Moscow, 119618 (RU); FILIPPOV, Anatoliy Nikolaevich, Moscow, oblast, 143005 (RU)
(74) Representative: Ege Lee & Roider Patentanwälte

(56) References cited:
- US-A1- 2013 032 240
- US-A1- 2015 170 788

## Description

The invention relates to flexible multilayer polymer pipes used in various fields of economic activities including heat supply, for transportation of media at variable temperatures up to 135°C and pressure exceeding 0.4 MPa. In particular, the pipe according to the invention can be used in heat supply systems with the temperature graph of heat energy supply ranging from 70° to 130°C and a working pressure of 1.6 MPa.

It is known that polyphenylene sulphide (PPS) is one of the most heat resistant and thermally stable thermoplastic materials. Goods made of this material can operate continuously at a temperature in the range of -60°C to +220°C and withstand a short-term heating up to 260-270°C. At the same time polyphenylene sulphide has exceptional chemical stability and a low level of water absorption (up to 0.02%). These properties allow one to use polyphenylene sulphide for the manufacture of various goods, including pipes for heat and water supply.

Pipes are known from the prior art (CN108727819, published November 2, 2018) that are manufactured from polyphenylene sulphide (PPS) reinforced with carbon fibre having characteristics such as: high strength, low specific mass, good impact strength, good heat conductivity, wear resistance, corrosion resistance, fatigue strength, simple manufacturing process, low cost of processing of semi-finished product. However, carbon fibre is brittle and has low friction resistance, which reduces flexibility and strength of the pipes due to failure of reinforcing fibres. Moreover, polyphenylene sulphide is inherently a rather rigid material, characterised by a modulus of elasticity in the range of 3.2-3.5 GPa.

To achieve flexibility and the required strength of the pipe for transportation of high-temperature media under pressure, multilayer pipes comprising at least one layer of a polyphenylene sulphide based composition which is more flexible than polyphenylene sulphide without additions, covered by a layer of another, less rigid polymer, can be used.

For multilayer pipes it is important to create bond between the layers to provide ring stiffness (form stability) of the pipes and to minimise the risk of collapse of the wall of the inner layer when the pipe is bent during winding or assembly, and also to provide transfer of loads developing in one of the layers of the pipe to other layers of the pipe, including the reinforcing layers if there are any in the pipe wall.

One of such multilayer pipes is described, for instance, in EP 0679825 A1, published November 02, 1995. The inner layer of this pipe is made of polyphenylene sulphide (PPS), while the outer one is made of polyamide. To achieve reliable bond between the layers, the outer surface of the polyphenylene sulphide layer is treated with corona discharge. However, this pipe is intended for transportation of hydrocarbons and cannot be used for transportation of water at a temperature above 100°C, due to the low hydrolysis resistance of polyamide, characterised by its degradation under the influence of humidity, which reduces the reliability and repairability of the pipes during long-term operation at high temperatures.

A pipe is known which is described in Canadian Patent No. 2537302, published March 31, 2005, the patent owner being NKT FLEXIBLES IS, which is a pipe intended for the transportation of hydrocarbons, comprising a two-layer inner shell, an inner layer of which, named film layer in the patent, is made of polyphenylene sulphide, while an outer one, named polymer layer in the patent, is made of polypropylene. The outer and the inner layers are bonded to each other due to special treatment of their surfaces or application of primers. The inner layer is substantially thinner than the outer one. The pipe is reinforced.

Disadvantages of this construction lie in insufficient bond of the layers of the inner shell with each other, which reduces reliability of the pipe as a whole, and also in insufficient thermal stability of the material of the outer layer for a long-term operation of the pipe at temperatures above 100°C, which could result in cracking of the outer layer.

The prior art most pertinent to the apparatus according to the invention is a pipe described in US application No. US 2004035485 A1, published February 26, 2004, applicant: POLYFLOW LLC, which is a pipe for transportation of hydrocarbons comprising an inner shell, one or more reinforcing layers and a cover layer arranged above all reinforcing layers, the inner shell comprising an inner layer of a polyphenylene sulphide-based composition and an outer layer made of polyamide, the inner and the outer layers being bonded to each other by an intermediate layer of ethylene-glycidyl methacrylate copolymer.

A disadvantage of this pipe is insufficient reliability of the pipe when used at high temperatures (above 100°C) due to low heat resistance of the intermediate layer made of ethylene-glycidyl methacrylate copolymer. Moreover, the problems of thermal stability and hydrolysis resistance of the outer layer are not solved, which leads to reduction of reliability of the pipe. Another reason for insufficient reliability of the pipe is that it does not have sufficient flexibility and heat resistance. The cause of insufficient flexibility and heat resistance of the pipe according to US application No. US 2004035485 is that ethylene-glycidyl methacrylate copolymer, characterized in low melting temperature, is used as the intermediate layer bonding the inner and outer layers of the inner shell, hence it is unable to maintain integrity of the construction of the layered inner shell when the pipe is operated at a temperature above 100°C. This feature may result in delamination of the construction during operation in stressed and deformed state, for instance, in places where the pipe is bent or where portions of the pipe are connected. As a result, redistribution of occurring loads and premature failure of the inner layer are possible. US2015/170788 A1 discloses pipes,with the inner shell having a multilayer construction of an inner layer of poly(phenylene sulfide) and an outer layer of polypropylene or of highdensity polyethylene. Said poly-propylene may be impact modified, e.g. employing ethylene propylene rubber or ethylene propylene diene rubber. If required, additional layers and/or adhesion promoters can be employed.

The technical problem to be solved by the invention is elimination of the above-listed disadvantages.

### Summary of the invention

The technical result of the invention is an increase of reliability of the flexible polymer multilayer reinforced pipe.

The technical result is achieved as follows: a flexible polymer multilayer reinforced pipe comprises an inner shell on which one or more reinforcing layers and a cover layer are arranged, the cover layer being arranged above all reinforcing layers, wherein the inner shell comprises an inner layer of a polyphenylene sulphide based composition and an outer layer, wherein the inner and the outer layers are bonded to each other by an intermediate layer, wherein the polyphenylene sulphide based composition of which the inner layer is made has a modulus of elasticity between 1.0 and 2.5 GPa, the outer layer and the cover layer of the multilayer pipe are made of a polypropylene based composition stabilised with antioxidants, and the intermediate layer is made of a polypropylene based composition containing functional groups having reactivity towards the polyphenylene sulphide that is contained in the composition of which the inner layer is made.

The inner layer can be made of a polymer polyphenylene sulphide based composition containing impact modifier in an amount between 5.0 % w/w and 25.0 % w/w.

In a special embodiment of the pipe an olefin homopolymer or copolymer containing functional groups of the class of epoxides or imines or isocyanates can be used as the impact modifier of the polyphenylene sulphide based composition, of which the inner layer is made.

In another special embodiment of the pipe the impact modifier in the polyphenylene sulphide based composition, of which the inner layer is made, is a mixture of an olefin homopolymer or copolymer containing functional groups of the class of epoxides or imines or isocyanates and an elastomer selected from the group of: a polyamide-ether copolymer, a polyamide-ester copolymer, an ethylene-propylene copolymer, an ethylene-1-butene copolymer, an ethylene-1-octene copolymer, an ethylene-propylene-butadiene terpolymer, a hydrogenated styrene-ethylene block copolymer (SEBS).

Functional groups of the class of isocyanates or imines or epoxides can be used as functional groups of the composition of the intermediate layer.

In the pipe according to the invention the reinforcing layer or layers can be formed as a mesh.

The outer layer can be characterised by absence of cracking on exposure to 135°C for at least 200 days.

In special embodiments of the pipe according to the invention the polypropylene based composition of which the outer layer is made contains a combination of sterically hindered phenol and sterically hindered phosphite, or a combination of sterically hindered phenol, sterically hindered phosphite and a thiosynergist, or a combination of sterically hindered phenol, sterically hindered phosphite and sterically hindered amine, or a combination of sterically hindered phenol and a thiosynergist, as antioxidants.

The polypropylene based composition of which the cover layer is made can contain a combination of sterically hindered phenol and sterically hindered phosphite, or a combination of sterically hindered phenol, sterically hindered phosphite and a thiosynergist, or a combination of sterically hindered phenol, sterically hindered phosphite and sterically hindered amine, or a combination of sterically hindered phenol and a thiosynergist, as antioxidants.

The reinforcing layer or layers can be made of polymer fibre, wherein para-aramid homopolymer fibre or para-aramid copolymer fibre can be used as this fibre.

The pipe can be provided with an outer protective casing covering the cover layer. Moreover the pipe can be provided with a gas barrier and/or a thermal insulation layer arranged between the outer protective casing and the cover layer.

The pipe can be provided with one or more adhesive layers. This layer or these layers can, for example, bond the outer protective casing with the gas barrier and/or the thermal insulation layer or one of these layers with the cover layer or the gas barrier and the thermal insulation layers with each other.

The adhesive layer or layers can be made of polypropylene grafted with maleic anhydride.

In the flexible polymer multilayer reinforced pipe the outer layer can be of greater thickness than the inner layer, or these layers can be of the same thickness.

The pipe according to the invention can be used for heat supply.

The pipe can be used for transportation of liquid media at variable temperatures up to 135°C and a pressure exceeding 0.4 MPa.

In this application the term "functional groups" is used for structural fragments of molecules causing characteristic chemical properties of a compound, for instance, the ability to react with certain classes of chemical substances.

### Detailed description of the invention

A polyphenylene sulphide based composition, which is one of the most heat resistant plastics and can facilitate sealing of the pipe wall during transportation of a medium in increased temperatures, was used for manufacturing the inner layer. Simultaneously the pipe wall must have sufficient flexibility and rigidity so that the pipe can be wound on drums for storage and transportation and can also be installed in underground conditions in a route that may bend at various angles, without usage of fittings.

To achieve the required flexibility it is necessary to use not polyphenylene sulphide as is but a composition on its basis, containing material such as an impact modifier having a greater impact strength and/or smaller modulus of elasticity than the basic material of the composition, in this case pure polyphenylene sulphide, and being compatible with it.

Introduction of an impact modifier makes it possible to increase flexibility of the polyphenylene sulphide by reducing modulus of elasticity of the composition. Compatibility of the material introduced into the polyphenylene sulphide means its ability to form chemical bonds with the polyphenylene sulphide.

When composite materials based on polyphenylene sulphide are used as materials of the inner layer of the inner shell of the pipe, the main factor influencing a winding radius of the pipe or its bending radius is modulus of elasticity of the pipe material including that of its inner layer. It has been shown by experiments that if modulus of elasticity of the material of the inner layer exceeds 2.5 GPa, the pipe may kink when bent, which results in a loss of its operational properties such as flow area, thus reducing its reliability.

The lower threshold of the range of modulus of elasticity of the inner layer is selected from the condition of correspondence with modulus of elasticity of the outer layer made of a polypropylene based composition, which is important for reliability of connections between sections of the pipe, including connection tightness, by means of fittings compressing the pipe wall.

Said range of values of modulus of elasticity provides ring stiffness of the pipe, thus increasing its reliability.

The content of impact modifier in the range of 5-25 % w/w in the polyphenylene sulphide based composition is determined by the requirement that necessary flexibility of material of the inner layer of the pipe must be provided while maintaining its heat resistance and thermal stability to increase reliability of the pipe.

The use of olefin homopolymers or copolymers containing functional groups of the class of epoxides or imines or isocyanates as an impact modifier is preferred. Presence of said functional groups in the impact modifier results in formation of chemical bonds between the matrix of the composition of polyphenylene sulphide and the modifier distributed therein, which facilitates reliable transfer of mechanical loads occurring during deformation of the pipe and increases flexibility of the inner shell of the pipe, thus increasing its reliability.

It is possible to use as an impact modifier a mixture of an olefin homopolymer or copolymer containing functional groups of the class of epoxides or imines or isocyanates and elastomer selected from the group of: a polyamide-ether copolymer, a polyamide-ester copolymer, an ethylene-propylene copolymer, an ethylene-1-butene copolymer, an ethylene-1-octene copolymer, an ethylene-propylene-butadiene terpolymer, a hydrogenated styrene-ethylene block copolymer (SEBS). In this mixture the olefin homopolymer or copolymer containing functional groups of the class of epoxides or imines or isocyanates facilitates compatibility of the elastomer with the polyphenylene sulphide, while the elastomer reduces modulus of elasticity of the composition relative to the pure material, increasing flexibility of the inner layer, and thus increasing reliability of the pipe.

However, even when an impact modifier is used thickness of the inner layer made of the polyphenylene sulphide based composition must not exceed 0.7-2.5 mm depending on a nominal size of the pipe. Otherwise it will not be possible to achieve the required flexibility characterised by the bending radius, equalling 20 to 30 outer diameters of the flexible multilayer reinforced polymer pipe. But this thickness is insufficient to provide ring stiffness of the pipe, causing risks of collapse and kinking of the pipe when it is bent.

To avoid said risks it is necessary to increase thickness of the inner shell of the pipe, therefore the layer of modified polyphenylene sulphide is covered with a layer of another material, hereinafter referred to as outer layer. The outer layer is used for economic considerations, since it can be made of a cheaper material than polyphenylene sulphide, as well as for its sufficient flexibility when manufactured from a polypropylene based composition.

The polypropylene based composition must have sufficient heat resistance and thermal stability to guarantee reliable, long-term operation of the pipe for transportation of liquid media at variable temperatures up to 135°C and pressure exceeding 0.4 MPa.

Heat resistance and thermal stability guarantee performance, ring stiffness and easy repair of the pipe in the above conditions.

The use of polypropylene, which has a sufficiently high melting temperature (above 135 degrees Celsius), as a basis of the composition guarantees heat resistance of the layer, while antioxidant additives guarantee its thermal stability, and consequently also reliability of the pipe during operation.

The outer layer must have high resistance to degradation under the influence of high temperatures and oxygen, manifesting itself in cracking of material during operation. To achieve the technical result material of the outer layer of the pipe contains a combination of stabilisers (antioxidants) providing high stability of the composition against cracking during long-term exposure to increased temperatures and oxygen.

The inner layer of the polyphenylene sulphide based composition prevents a wash-out of the antioxidants by the transported medium from the outer layer made of polypropylene based composition stabilised by said antioxidants.

For reliable operation of the pipe, in the composition of the outer layer such antioxidants are used that prevent cracking of the layer on exposure of the pipe to 135°C for at least 200 days.

A combination of sterically hindered phenol and sterically hindered phosphite or a combination of sterically hindered phenol, sterically hindered phosphite and a thiosynergist or a combination of sterically hindered phenol, sterically hindered phosphite and sterically hindered amine or a combination of sterically hindered phenol and a thiosynergist is used as antioxidants of the outer layer.

In this description the terms "sterically hindered phenol", "sterically hindered phosphite", "sterically hindered amine" and "thiosynergist" mean that one could use either a single compound of the indicated class, or several compounds of the corresponding class. In other words, either one sterically hindered phenol can be used or a combination of several sterically hindered phenols can be used. This applies to sterically hindered phosphites, sterically hindered amines and thiosynergists as well.

Material of the cover layer is selected on the basis of the same considerations as material of the outer layer. Additionally material of this layer allows protection of the reinforcing layer or layers from unfavourable external influences.

Said combinations of substances provide effective inhibition of degradation in operating conditions of the pipe at varying temperatures up to 135°C, and in some cases up to 150°C depending on the type of polypropylene used and on the combination of stabilisers.

In a particular embodiment of the pipe according to the invention selected material of the outer layer of the inner shell and material of the cover layer can be propylene homopolymer containing a specially selected combination of antioxidants listed in Table 1, preventing development of thermal-oxidative degradation:

**Table 1**

| Combination of antioxidants included in the polymer composition of the outer or cover layers composed on the basis of propylene homopolymer | | |
|---|---|---|
| **Combination No.** | **Components of the combination of antioxidants** | **Content in %w/w** |
| **1.** | Irganox 1010 | 0.05-0.25 |
| | Irgafos 168 | 0.05-0.50 |
| | ADK STAB AO-80 | 0.05-0.50 |
| | ADK STAB AO-412S | 0.05-1.00 |
| | AO PEP-36 | 0.05-0.50 |
| **2.** | Irganox 1010 | 0.05-0.25 |
| | Irgafos 168 | 0.05-0.50 |
| | Cyanox 1790 | 0.05-0.50 |
| | Irganox 1330 | 0.05-0.50 |
| | Doverphos S9228 | 0.05-0.50 |
| | ADK STAB AO-412S | 0.05-1.00 |
| **3.** | Irganox 1010 | 0.05-1.00 |
| | Irgafos 168 | 0.05-0.50 |
| | Irganox PS802 | 0.10-1.00 |
| | Irgafos PEP-Q | 0.10-1.00 |

The combination of antioxidants is selected experimentally. A control parameter in the execution of experiments is duration of ageing in an oven until signs of cracking of the material occur, which should be no less than 200 days at a temperature of 135°C.

Selection of the combination of antioxidants is not limited by the examples listed above. Other brands of antioxidants can be used.

A propylene-ethylene copolymer containing specially selected combinations of antioxidants preventing development of thermal-oxidative degradation, listed in Table 2, can be selected as material of the outer layer and material of the cover layer:

**Table 2**

| Combination of antioxidants included in the polymer composition of the outer or cover layers composed on the basis of propylene-ethylene copolymer | | |
|---|---|---|
| **Formula No.** | **Components of the combination of antioxidants** | **Content in %w/w** |
| **1.** | Irganox 1010 | 0.05-0.40 |
| | Irganox 1330 | 0.05-0.40 |
| | Irgafos 168 | 0.05-0.50 |
| | ADK STAB AO-80 | 0.05-0.50 |
| | ADK STAB AO-412S | 0.05-1.00 |
| | AO PEP-36 | 0.05-0.50 |
| **2.** | Irganox 1010 | 0.05-0.40 |
| | Irganox 1330 | 0.05-0.40 |
| | Irgafos 168 | 0.05-0.50 |
| | Cyasorb UV-3529 | 0.05-0.40 |
| **3.** | Irganox 1010 | 0.10-1.20 |
| | Irganox 1330 | 0.05-0.40 |
| | Irgafos 168 | 0.05-0.50 |
| | Irganox PS802 | 0.10-0.50 |
| | Irgafos PEP-Q | 0.10-0.50 |

Selection of the combination of antioxidants is not limited by the examples listed above. Other brands of antioxidants can be used.

The combination of antioxidants is selected experimentally. A control parameter in the execution of experiments is duration of ageing in the oven until signs of cracking of the material occur, which should be no less than 200 days at a temperature of 135°C.

Different materials can be used for the outer layer of the inner shell and the cover layer.

The brands of antioxidants listed above are commercially available; their chemical names are shown in table 3:

**Table 3**

| Antioxidant brands and their chemical names | | | |
|---|---|---|---|
| Antioxidant brand | CAS No. | Chemical name | Antioxidant type |
| Irganox 1010 | 6683-19-8 | Pentaerythritol tetrakis(3-(3,5-di-tert-butyl-4-hydroxyphenyl)propionate) | Sterically hindered phenol |
| Irgafos 168 | 31570-04-4 | Tris(2,4-ditert-butylphenyl)phosphite | Sterically hindered phosphite |
| ADK STAB AO-80 | 90498-90-1 | 2,4,8,10-tetraoxaspiro[5.5]undecane-3,9-diylbis(2,2-dimethyl-2,1-ethanediyl) bis(3-(3,5-di-tert-butyl-4-hydroxyphenyl)propionate) | Sterically hindered phenol |
| ADK STAB AO-4125 | 29598-76-3 | Pentaerythritol tetrakis ( 3-lauryl thiopropionate) | Thiosynergist |
| AO PEP-36 | 80693-00-1 | 3,9-bis-(2,6-di-tert-Butyl-4-methylphenoxy)-2,4,8,10-tetraoxa-3,9-diphosphaspiro[5.5]undecane | Sterically hindered phosphite |
| Cyanox 1790 | 40601-76-1 | 1,3,5-tris(4-tert-butyl-3-hydroxy-2,6-dimethyl benzyl)-1,3,5-triazine-2,4,6-(1H,3H,5H)-trione | Sterically hindered phenol |
| Irganox 1330 | 1709-70-2 | 1,3,5-Trimethyl-2,4,6-tris(3,5-di-tert-butyl-4-hydroxybenzyl)benzene | Sterically hindered phenol |
| Doverphos S9228 | 154862-43-8 | 3,9-Bis(2,4-dicumylphenoxy)-2,4,8,10-tetraoxa-3,9-diphosphaspiro[5.5]undecane | Sterically hindered phosphite |
| Irganox PS802 | 693-36-7 | Dioctadecyl 3,3'-thiodipropionate | Thiosynergist |
| Irgafos PEP-Q | 119345-01-6 | Tetrakis(2,4-di-tert-butylphenyl)-4,4-biphenyldiphosphonite | Sterically hindered phosphite |
| Cyasorb UV-3529 | 193098-40-7 | N,N'-Bis(2,2,6,6-tetramethyl-4-piperidinyl)-1,6-hexanediamine polymers with morpholine-2,4,6-trichloro-1,3,5-triazine reaction products, methylated | Sterically hindered amine |

The inner shell of the multilayer pipe consists of an outer and an inner layers bonded to each other by means of an intermediate layer bonding these layers and making the inner shell integral, which makes it possible to effectively transfer loads due to internal pressure, and also increases ring stiffness of the pipe, thus enhancing its reliability.

The intermediate layer is made of a polypropylene based composition containing functional groups that are reactive with material of the inner layer.

Material of the intermediate layer is a propylene homopolymer or copolymer containing reactive functional groups introduced with any available method including the methods of copolymerisation, grafting and compounding.

The composition of which the intermediate layer is made containing functional groups capable of interacting with polyphenylene sulphide. Due to this interaction it is possible to achieve reliable bonding of materials of the inner and the intermediate layers.

Functional groups of material of the intermediate layer can belong to classes of compounds such as epoxides or imines or isocyanates.

Selection of polypropylene as a basis of polymer material of the intermediate layer facilitates its reliable bond with material of the outer layer (polypropylene) due to interaction between molecules of the same kind: dispersion and dipole-dipole interactions and van der Waals forces, enhancing reliability of the pipe.

Due to sufficient heat resistance of material of the intermediate layer flexibility and ring stiffness of the multilayer pipe is achieved during operation in increased temperatures.

All the above-listed properties of the intermediate layer facilitate increase of reliability of the pipe.

The multilayer pipe comprises a reinforcing layer making it possible to use the pipe for transportation of heat transfer fluid with variable temperature up to 135°C, and in some cases up to 150°C, and pressure above 0.4 MPa, which is necessary to supply a consumer with heat-transfer fluid or transported liquid with the given parameters.

The reinforcing layer is necessary to facilitate transportation of a medium under the above-mentioned pressure and the above-mentioned temperature. The reinforcing layer can be formed as a mesh arranged on the outer layer of the pipe.

The reinforcing layer formed as a mesh makes it possible to achieve integrity of the pipe construction by bonding the cover layer and the outer layer of the inner shell in cells of the mesh forming a reinforcing casing, providing flexibility and ring stiffness of the multilayer construction.

It is possible to make the reinforcing layer of polymer fibre, for which para-aramid fibre or fibre of aramid copolymer can be used.

High-strength and high-modulus fibres can be used as polymer fibre, for instance para-aramid fibre, well-known brands of which are Kevlar^{®} (DuPont) and Twaron^{®} (Akzo/Acordis) or fibre of aramid copolymer, for instance Technora. The use of aramid copolymer as a reinforcing layer provides increase of reliability of the pipe also due to higher hydrolytic stability of the aramid copolymer.

Experiments have shown that the above-mentioned fibres maintain their level of strength even at temperatures exceeding 150 degrees Celsius.

The pipe according to the invention comprises a cover layer covering the reinforcing layer or layers made of a stabilised polypropylene based composition containing, as mentioned above, antioxidants providing resistance of the pipe according to the invention against thermal-oxidative degradation when exposed to high temperature.

The cover layer protects the reinforcing layer or layers in the process of transportation and assembly of the pipe.

If the pipe comprises one reinforcing layer, the cover layer is arranged above this one layer. If there are several reinforcing layers, the cover layer is arranged above the reinforcing layer that is the farthest removed from the longitudinal axis of the pipe.

Increase of thermal stability, heat resistance, flexibility, decrease of the risk of premature failure of the pipe and provision of sufficient ring stiffness result in enhanced reliability of the flexible polymer multilayer reinforced pipe during storage, transportation and operation.

Moreover the multilayer pipe can comprise an outer protective casing. The outer protective casing functions as protection from external influences. The pipe can be provided with a gas barrier layer having gas barrier properties, to achieve low rate of gas permeation into transported medium, or a thermal insulation layer, if it exists in one of the embodiments of the pipe according to the invention, wherein for its manufacturing such materials as, for instance, ethylene-vinyl alcohol copolymer (EVOH), polyamide or aliphatic polyketone are used.

Moreover the pipe can comprise a thermal insulation layer to reduce heat loss during transportation of a medium at a high temperature, made, for instance, of such materials as foamed polyurethane and polyisocyanurate.

The outer protective casing, the gas barrier layer and/or the thermal insulation layer can be bonded to each other by adhesive layers.

The gas barrier layer protects pipe layers against the influence of air gases, thus increasing reliability of the pipe in general.

In one of the embodiments the multilayer pipe can be provided with an adhesive layer arranged above the cover layer of the multilayer pipe to provide integrity of the pipe and enhance its reliability.

Propylene homopolymer or copolymer grafted with maleic anhydride can be used as an adhesive to create integral construction of the pipe, to provide reliability of the pipe during transportation and operation.

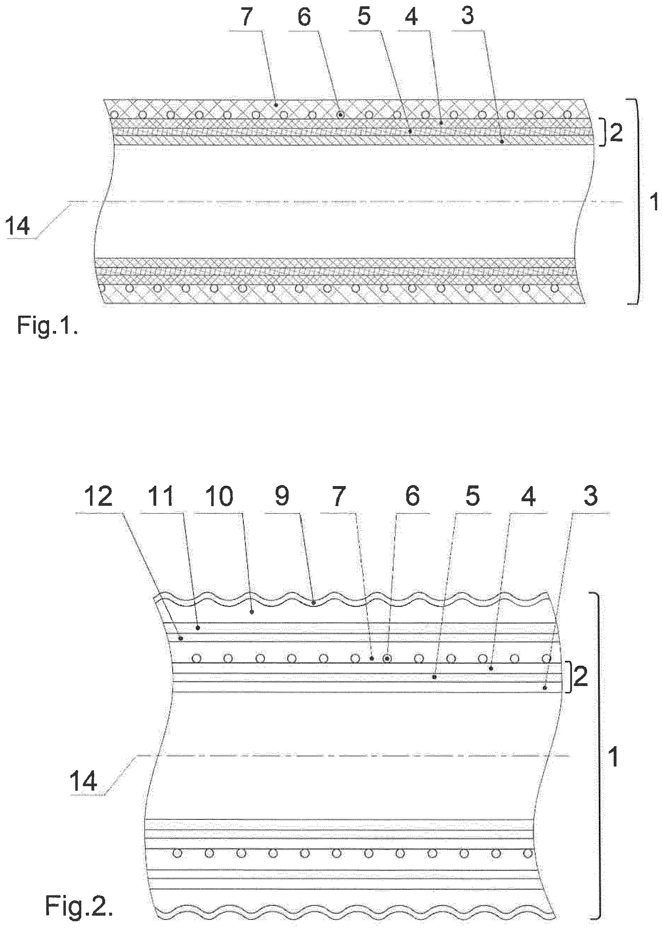

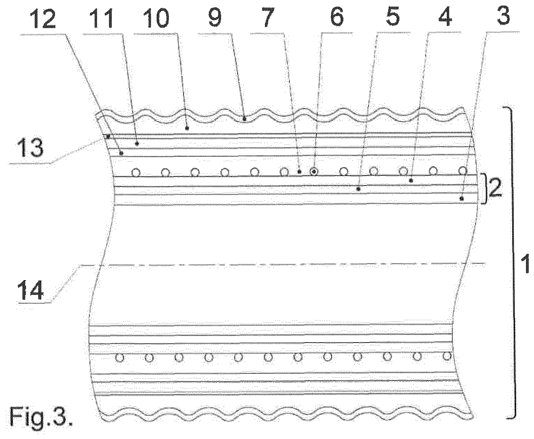

In Fig. 1 the multilayer pipe according to the invention is schematically shown; In Fig. 2 and 3 special embodiments of the pipe are shown.

In Fig. 1 the multilayer pipe 1 comprising an inner shell 2 consisting of an inner layer 3 and an outer layer 4 bonded by an intermediate layer 5 disposed between the inner layer 3 and the outer layer 4 of the shell 2 is schematically shown. Said pipe includes a reinforcing layer 6 disposed between the outer layer 4 of the inner shell 2 and a cover layer 7 of the multilayer pipe 1.

The reinforcing layer 6 is made of polymer fibres or yearns, spirally arranged on the outer layer 4 of the inner shell 2 of the pipe 1, called reinforcing fibres or yarns, spirally arranged in opposite directions forming a mesh. The reinforcing layer 6 can be at least partially arranged on the cover layer 7 on its inside.

In Fig. 2 an embodiment of the multilayer pipe is shown wherein the pipe 1 formed by the above-mentioned layers 3, 4, 5, 6, 7 is covered in sequence by a gas barrier layer 11, a thermal insulation layer 10 and an outer protective casing 9. The outer protective casing 9 is a layer that protects the pipe from external influences including the influence of moisture. Between the cover layer 7 and the gas barrier layer 11 an adhesive layer 12 is arranged bonding the layers 7 and 11. Reference numeral 2 denotes the inner shell.

Another embodiment of the multilayer pipe is shown in Fig. 3, where unlike that in Fig. 2 between the gas barrier layer 11 and the thermal insulation layer 10 an adhesive layer 13 bonding them is arranged.

Reference numeral 14 denotes the longitudinal axis of the pipe throughout the drawings.

The pipe is manufactured as follows:
The inner shell consisting of the inner layer 3, the outer layer 4 and the intermediate layer 5 is manufactured by coextrusion, during which materials of the layers contact each other in molten state, which allows reactions of functional groups contained in the intermediate layer 5 with material of the inner layer 3 to occur and ensures adhesive bonding of materials of all the layers. Further, the inner shell 2 of the pipe 1 passes through a calibrating device and a cooling tub (not shown) to be given predetermined geometrical properties. Subsequently it is coated with one reinforcing layer 6 formed as interwoven yarns of polymer fibre, or several such reinforcing layers forming a reinforcing casing. Above the reinforcing layer or layers 6 the cover layer 7 of the pipe made of a polypropylene based composition comprising antioxidants is extruded. The use of polypropylene as a basis of the compositions of the cover layer 7 and the outer layer 4 facilitates bond of the outer layer 4 of the inner shell 2 and the cover layer 7 while using the reinforcing layer or layers 6 formed as a mesh, due to penetration of molten polymer between yarns of the mesh.

If required, the outer protective casing 9 and the thermal and/or gas barrier layers 10, 11 arranged under the outer protective casing 9 can be applied on the cover layer 7 of the pipe.

The pipe works as follows.

The finished pipe is supplied to the customer in long sections wound on transport drums or wound into coils. The unwinding of the pipe before installation is carried out at ambient temperature that should not be lower than a threshold level determined by types of polypropylene used as a basis of the composition of the outer layer of the inner shell of the pipe and the cover layer applied above one or more reinforcing layers, and also the outer protective casing if there is one.

When said layers are made of different types of polypropylene, a threshold level of ambient temperature is selected ensuring that there is no risk of damaging all the types of polypropylene used. If ambient temperature is below the threshold level the pipe wound on a drum or coiled and intended for unwinding is first warmed up by warm air to temperature above the threshold level.

During operation of a pipeline made of the pipe of the above-described construction transported medium, for instance heat-transfer fluid, in particular water, is fed into the pipe 1 comprising the reinforcing layer (or the reinforcing layers) 6, the inner shell 2 of which consists of the following, subsequently arranged in the order of their distance from the longitudinal axis 14 of the pipe 1: the inner layer 3 made of a polyphenylene sulphide based composition containing an impact modifier, the intermediate layer 5 made of a polymer polypropylene based composition containing isocyanate or imine or epoxide functional groups, and the outer layer 4 made of a polypropylene based composition containing antioxidants. The intermediate layer 5 bonds the inner layer 3 with the outer layer 4. The reinforcing layer 6 is arranged on the outer layer 4.

Above the reinforcing layer 6 the cover layer 7 is arranged, with the possibility of direct contact with the outer layer 4 if cells of the reinforcing layer 6 are large enough. The cover layer 7 is made of a polypropylene based composition containing antioxidants. If necessary, the outer protective casing 9 is arranged on the cover layer 7. The heat-transfer fluid, in particular water, can be heated to the temperature of 135 degrees Celsius and can be pressurized up to 1.6 MPa.

One or more reinforcing layers 6 bear mechanical loads developing in the pipe wall under the influence of variable increased temperatures and pressures during operation, thus reducing stresses developing in the inner shell 2 of the pipe 1, which increases reliability of the pipe.

The reinforcing layer or layers 6 are formed in such a way that they compensate any tangential as well as axial stresses in the wall of the pipe 1 developing because of thermal expansion of materials of the pipe and simultaneous impact of internal pressure. Yarns of high-strength high-modulus fibres consisting of para-aramid homopolymer or para-aramid copolymer are used as material of the reinforcing layer 6. These materials combine high strength and high level of modulus of elasticity, which provides them with resistance against deformation under the impact of tensile force.

The cover layer 7 made of a polypropylene based composition containing antioxidants, which is arranged above the reinforcing layer(s) 6, provides protection of yarns of the reinforcing layer(s) 6 from mechanical damage and the influence of moisture caused by external influences during winding, transportation, assembly and operation of the pipe.

For correct functioning of the reinforcing layer(s) 6 it is important to also facilitate transfer of the loads between the layers of the inner shell 2, which is possible if there is a strong adhesive bond between the outer layer 4 and the inner layer 3 of the inner shell 2 of the pipe 1 which is maintained during operation across the entire temperature range. This can be achieved if a polypropylene based composition containing functional groups selected from the class of epoxides or imines or isocyanates is used as material of the intermediate layer 5. High melting temperature of the composition provides strong bond between the outer layer 4 and the inner layer 3 of the inner shell 2 and excludes delamination of the inner shell 2 of the pipe 1 in places where the pipe is bent or connected under operating conditions of the pipe.

During transportation of a heat-transfer fluid (in particular water) through the pipe materials of the inner shell and the cover layer are affected by high temperatures and oxygen which can migrate through outer layers of the pipe and through the ground (in case of underground installation). Said impact can cause thermal-oxidative degradation of polymers. Introduction of a specially selected combination of antioxidants allows one to inhibit the processes of thermal-oxidative degradation of polymers which would lead to rapid loss of their physical and mechanical properties.

In specific embodiments of the invention the pipe can be provided with the outer protective casing 9 arranged above the cover layer for additional protection of the underlying layers of the pipe.

To prevent oxygen from migration into the pipe, a gas barrier layer consisting of material that has lower permeability of air gases compared to materials of the other layers can be introduced into the pipe. This step allows one to decelerate saturation of the heat-transfer fluid transported (for instance water) with oxygen which contributes to corrosion of metal parts of heat supply system (fittings, heat exchangers etc.) and also additionally reduces the rate of thermal-oxidative degradation of materials of the inner shell and the cover layer of the pipe.

If the gas barrier layer 11 is applied on the outer surface of the cover layer 7 of the pipe, an adhesive material is used to bond said layers, for example propylene homopolymer or copolymer grafted with maleic anhydrine groups capable of forming a reliable bonding between the layers, which is required to prevent destruction of the gas barrier layer 11 and deterioration of its gas barrier properties, which can occur when the gas barrier layer 11 is delaminated from the underlying cover layer 7.

The pipe can comprise a thermal insulation layer 10 made of semi-rigid foamed polyurethane or polyisocyanurate. The use of the thermal insulation layer 10 results in reduction of heat energy loss from the transported heat-transfer fluid. Gases having lower specific thermal conductivity compared to air, or liquids whose vapours have lower specific thermal conductivity compared to air, for example carbon dioxide, cyclopentane, isopentane, halogen-containing hydrocarbon derivatives etc., can be used as foaming agent for polyurethane or polyisocyanurate.

The gas barrier layer 11 can be arranged under the thermal insulation layer 10. In this case the gas barrier layer 11 can be bonded to the cover layer 7 and the thermal insulation layer 10 by adhesive layers 12 and 13, respectively, made of propylene homopolymer or copolymer grafted with maleic anhydride groups. The adhesive layers 12 and 13 or one of these layers are required if material of the gas barrier layer does not show adhesion to materials of the layer 10 above and/or the layer 7 below.

The gas barrier layer 11 can be arranged above the thermal insulation layer 10. In this case it prevents development of air gases in the thermal insulation layer 10 and their subsequent migration into the heat-transfer fluid. The gas barrier layer 11 and the thermal insulation layer 10 can be bonded by means of an adhesive, for example ethylene homopolymer or copolymer grafted with maleic anhydride groups. The adhesive layers or layer are required if material of the gas barrier layer does not show adhesion to materials of the layer 9 above and/or the layer 10 below.

The invention can be illustrated by the following construction examples of the pipe, which has the required heat resistance, strong bonding between the layers of the inner shell during impact of the transported medium, sufficient flexibility and ring stiffness when the pipe is wound on a drum and is installed, as well as resistance to thermal-oxidative degradation, which is shown by the fact that the outer layer and the cover layer do not show any cracking when exposed to the temperature of 135°C for more than 200 days.

### Example 1

A flexible polymer multilayer reinforced pipe comprises an inner shell having an inner and an outer layers, wherein the inner layer is made of a polyphenylene sulphide based composition containing 2% w/w ethylene copolymer containing epoxide functional groups, the mole fraction of which in said ethylene copolymer is 8%, and 5% w/w elastomer on the basis of polyamide-ether copolymer, while the outer layer is made of a statistical propylene-ethylene copolymer based composition containing a combination of antioxidants including sterically hindered phenol, sterically hindered phosphite and a thiosynergist, the total amount of which in the statistical propylene-ethylene copolymer based composition is 2.2% w/w. The inner and outer layers are bonded by an intermediate layer of statistical propylene-ethylene copolymer containing isocyanate functional groups. The outer layer is covered by a reinforcing layer forming a mesh made of yarns of para-aramid homopolymer, above which a cover layer of statistical propylene-ethylene copolymer is arranged containing the antioxidants mentioned above in this example to the amount of 2.2 % w/w. The outer diameter of the pipe is 70 mm, the thickness of the inner layer is 1.4 mm, the thickness of the outer layer is 1.4 mm, the thickness of the intermediate layer is 0.2 mm, the total thickness of the reinforcing and cover layers is 1.6 mm. The modulus of elasticity of the composition of which the inner layer is made is 2.4 GPa. The pipe is characterised by its high resistance to thermal-oxidative degradation, which is shown by the fact that the samples made from the pipe showed no cracking of the outer and cover layers when exposed to the temperature of 135°C for at least 250 days.

### Example 2

A flexible polymer multilayer reinforced pipe comprises an inner shell having an inner and an outer layers, wherein the inner layer is made of a polyphenylene sulphide based composition containing 2% w/w ethylene copolymer containing epoxide functional groups, the mole fraction of which in said ethylene copolymer is 8%, and 5% w/w elastomer on the basis of polyamide-ether copolymer, while the outer layer is made of a statistical propylene-ethylene copolymer based composition containing a combination of antioxidants including sterically hindered phenol, sterically hindered phosphite and a thiosynergist, the total amount of which in the statistical propylene-ethylene copolymer based composition is 2.2% w/w. The inner and outer layers are bonded by an intermediate layer of statistical propylene-ethylene copolymer containing imine functional groups. The outer layer is covered by a reinforcing layer forming a mesh made of yarns of para-aramid homopolymer, above which a cover layer of statistical propylene-ethylene copolymer is arranged containing the antioxidants mentioned above in this example to the amount of 2.2 % w/w. The outer diameter of the pipe is 70 mm, the thickness of the inner layer is 1.4 mm, the thickness of the outer layer is 1.4 mm, the thickness of the intermediate layer is 0.2 mm, the total thickness of the reinforcing and cover layers is 1.6 mm. The modulus of elasticity of the composition of which the inner layer is made is 2.4 GPa. The pipe is characterised by its high resistance to thermal-oxidative degradation, which is shown by the fact that the samples made from the pipe showed no cracking of the outer and cover layers when exposed to the temperature of 135°C for at least 250 days.

### Example 3

A flexible polymer multilayer reinforced pipe comprises an inner shell having an inner and an outer layers, wherein the inner layer is made of a polyphenylene sulphide based composition containing 20% w/w ethylene copolymer containing epoxide functional groups, the mole fraction of which in said ethylene copolymer is 8%, while the outer layer is made of a homopolypropylene based composition and antioxidant, for which a combination of sterically hindered phenol, phosphite and a thiosynergist is used, the total amount of which in the homopolypropylene based composition is 0.87% w/w. The inner and the outer layers are bonded by an intermediate layer of homopolypropylene containing isocyanate functional groups. The outer layer is covered by the reinforcing layer formed as a mesh made of yarns of para-aramid copolymer, above which the cover layer of homopolypropylene is arranged containing the antioxidants mentioned above in the amount of 0.87 % w/w. The outer diameter of the pipe is 101 mm, the thickness of the inner layer is 1.8 mm, the thickness of the outer layer is 1.9 mm, the thickness of the intermediate layer is 0.2 mm, the total thickness of the reinforcing and cover layers is 2.6 mm. The modulus of elasticity of the composition from which the inner layer is made is 1.8 GPa. The pipe is characterised by its high resistance to thermal-oxidative degradation, which is shown by the fact that the samples made from the pipe showed no cracking of the outer and cover layers when exposed to the temperature of 135°C for more than 200 days, and for at least 170 days when exposed to the temperature of 150°C.

### Example 4

A flexible polymer multilayer reinforced pipe comprises an inner shell having an inner and an outer layers, wherein the inner layer is made of a polyphenylene sulphide based composition containing 10% w/w ethylene copolymer containing epoxide functional groups, the mole fraction of which in said ethylene copolymer is 12%, and 10% w/w elastomer on the basis of ethylene-propylene copolymer, while the outer layer is made of a composition based on a statistical propylene-ethylene copolymer containing a combination of antioxidants, namely: sterically hindered phenol, sterically hindered phosphite and a thiosynergist, the total amount of which in the statistical propylene-ethylene copolymer based composition is 2.2% w/w. The inner and outer layers are bonded by an intermediate layer of statistical propylene-ethylene copolymer containing imine functional groups. The outer layer is covered by a reinforcing layer made of yarns of para-aramid homopolymer, above which a cover layer of statistical propylene-ethylene copolymer is arranged containing the antioxidants mentioned above to the amount of 2.2 % w/w. The outer diameter of the pipe is 70 mm, the thickness of the inner layer is 1.4 mm, the thickness of the outer layer is 1.4 mm, the thickness of the intermediate layer is 0.2 mm, the total thickness of the reinforcing and cover layers is 1.6 mm. The modulus of elasticity of the composition of which the inner layer is made is 1.8 GPa. The pipe is characterised by its high resistance to thermal-oxidative degradation, which is shown by the fact that the samples made from the pipe showed no cracking of the outer and cover layers when exposed to the temperature of 135°C for at least 250 days.

### Example 5

A flexible polymer multilayer reinforced pipe comprises an inner shell having an inner and an outer layers, wherein the inner layer is made of a polyphenylene sulphide based composition containing 15% w/w ethylene copolymer containing epoxide functional groups, the mole fraction of which in said ethylene copolymer is 8%, while the outer layer is made of a homopolypropylene based composition and antioxidant, for which a combination of sterically hindered phenol, sterically hindered phosphite and a thiosynergist is used, the total amount of which in the homopolypropylene based composition is 1.77% w/w. The inner and outer layers are I bonded by an intermediate layer of homopolypropylene containing isocyanate functional groups. The outer layer is covered by a reinforcing layer made of yarns of para-aramid copolymer, above which a cover layer of homopolypropylene is arranged containing the antioxidants mentioned above to the amount of 1.77 % w/w. The outer diameter of the pipe is 101 mm, the thickness of the inner layer is 1.8 mm, the thickness of the outer layer is 1.9 mm, the thickness of the intermediate layer is 0.2 mm, the total thickness of the reinforcing and cover layers is 2.6 mm. The modulus of elasticity of the composition of which the inner layer is made is 2.0 GPa. The pipe is characterised by its high resistance to thermal-oxidative degradation, which is shown by the fact that the samples made from the pipe showed no cracking of the outer and cover layers when exposed to the temperature of 135°C for more than 200 days, and also showed no cracking for at least 130 days when exposed to the temperature of 150°C.

### Example 6

A flexible polymer multilayer reinforced pipe comprises an inner shell having an inner layer made of a polyphenylene sulphide based composition containing 3% w/w polypropylene containing isocyanate functional groups, the mole fraction of which in said propylene polymer is 2%, and 5% w/w polyamide polyester block copolymer, and an outer layer made of a homopolypropylene based composition containing a combination of antioxidants, namely sterically hindered phenol, sterically hindered phosphite and a thiosynergist, the total amount of which in the composition is 1.77% w/w. The inner and outer layers are bonded by an intermediate layer of homopolypropylene containing imine functional groups. Para-aramid copolymer is selected as material of the reinforcing layer covering the outer layer. The cover layer arranged above the reinforcing layer is made of a homopolypropylene based composition containing a combination of antioxidants, namely sterically hindered phenol, sterically hindered phosphite and a thiosynergist, the total amount of which in the composition is 1.77% w/w. The outer diameter of the pipe is 101 mm, the thickness of the inner layer is 1.8 mm, the thickness of the outer layer is 1.9 mm, the thickness of the intermediate layer is 0.2 mm, the total thickness of the reinforcing and cover layers is 2.6 mm. The modulus of elasticity of the composition of which the inner layer is made is 2.3 GPa. The pipe is characterised by its high resistance to thermal-oxidative degradation, which is shown by the fact that the samples made from the pipe showed no cracking of the outer and cover layers when exposed to the temperature of 135°C for more than 200 days, and also showed no cracking for at least 130 days when exposed to the temperature of 150°C.

The flexible polymer multilayer reinforced pipe comprises an outer protective casing surrounding the cover layer. Between the outer protective casing and the cover layer a thermal insulation layer of foamed polyisocyanurate is arranged, which is protected from external impacts by the outer protective casing of linear low density polyethylene. The thickness of the thermal insulation layer is at least 19 mm, and the thickness of the protective casing of linear low density polyethylene is 3.0 mm.

### Example 7

A flexible polymer multilayer reinforced pipe comprises an inner shell consisting of an inner layer made of a polyphenylene sulphide based composition containing 5% w/w propylene copolymer containing imine functional groups, the mole fraction of which in said copolymer is 1.0%, and 15% w/w ethylene-propylene-butadiene terpolymer, and an outer layer made of a statistical polypropylene copolymer based composition containing a combination of antioxidants, namely: sterically hindered phenol, sterically hindered phosphite and sterically hindered amine, the total amount of which in the composition is 1.0 % w/w. The outer and inner layers of the inner shell are bonded by an intermediate layer made of a polypropylene based composition containing epoxide functional groups. The modulus of elasticity of the material of which the inner layer is made is 1.7 GPa. Above the outer layer two reinforcing layers are arranged forming a mesh made of fibres on the basis of para-aramid homopolymer. The reinforcing layers are covered by a cover layer made of a statistical polypropylene copolymer based composition containing a combination of antioxidants, namely: sterically hinderedphenol, sterically hindered phosphite and sterically hindered amine, the total amount of which in the composition is 1.0 %w/w. The outer diameter of the pipe is 70 mm, the thickness of the inner layer is 1.4 mm, the thickness of the outer layer is 1.4 mm, the thickness of the intermediate layer is 0.2 mm, the total thickness of the reinforcing and cover layers is 1.6 mm. The pipe is characterised by its high resistance to thermal-oxidative degradation, which is shown by the fact that the samples made from the pipe showed no cracking of the outer and cover layers when exposed to the temperature of 135°C for at least 220 days.

The pipe comprises an outer protective casing. A gas barrier layer and a thermal insulation layer are arranged between the outer protective casing and the cover layer. The gas barrier layer is made of ethylene copolymer and vinyl alcohol, the mole fraction of ethylene therein being 32%, and is bonded to the cover layer of the pipe by an adhesive, for which polypropylene grafted with maleic anhydride is used. The thermal insulation layer is made of foamed polyurethane. The outer protective casing is made of low density polyethylene. The thickness of the gas barrier layer is 0.2 mm, the thickness of the adhesive layer bonding the gas barrier layer with the cover layer is 0.15 mm, the thickness of the thermal insulation layer is at least 19 mm, and the thickness of the outer protective casing is 2.6 mm.

The given examples do not exhaustively cover all embodiments of the invention, and existence of the mentioned functional groups and/or antioxidants in materials of the layers can be proven by detection of absorption bands of the layer material in the infrared spectrum which are characteristic of the mentioned substances, or identification of such substances by methods of mass spectrometry, gas or liquid chromatography, thermogravimetric analysis and other physical/chemical analysis methods applicable.

## Claims

1. Flexible polymer multilayer reinforced pipe (1) comprising an inner shell (2), one or more reinforcing layers (6) arranged thereon and a cover layer (7) arranged above all reinforcing layers (6), wherein the inner shell (2) comprises an inner layer (3) of a polyphenylene sulphide based composition and an outer layer (4), wherein the inner and the outer layers (3, 4) are bonded to each other by an intermediate layer (5), **characterised in that** the polyphenylene sulphide based composition of which the inner layer (3) is made has a modulus of elasticity between 1.0 and 2.5 GPa, the outer layer (4) and the cover layer (7) of the multilayer pipe (1) are made of a polypropylene based composition stabilised with antioxidants, and the intermediate layer (5) is made of a polypropylene based composition containing functional groups having reactivity towards the polyphenylene sulphide that is contained in the composition of which the inner layer (3) is made.

2. Flexible polymer multilayer reinforced pipe according to claim 1, **characterised in that** the polyphenylene sulphide based composition of which the inner layer (3) is made contains an impact modifier in the amount between 5.0 % w/w and 25.0 % w/w.

3. Flexible polymer multilayer reinforced pipe according to claim 2, **characterised in that** an olefin homopolymer or copolymer containing functional groups of the class of epoxides or imines or isocyanates is used as an impact modifier of the polyphenylene sulphide based composition of which the inner layer (3) is made.

4. Flexible polymer multilayer reinforced pipe according to claim 2, **characterised in that** the impact modifier in the polyphenylene sulphide based composition of which the inner layer (3) is made contains a mixture of an olefin homopolymer or copolymer containing functional groups of the class of epoxides or imines or isocyanates and an elastomer selected from the group of: a polyamide-ether copolymer, a polyamide-ester copolymer, an ethylene-propylene copolymer, an ethylene-1-butene copolymer, an ethylene-1-octene copolymer, an ethylene-propylene-butadiene terpolymer, a hydrogenated styrene-ethylene block copolymer (SEBS).

5. Flexible polymer multilayer reinforced pipe according to any of the preceding claims, **characterised in that** functional groups of the class of isocyanates or imines or epoxides are used as functional groups of the composition of the intermediate layer (5).

6. Flexible polymer multilayer reinforced pipe according to any of the preceding claims, **characterised in that** the reinforcing layer or layers (6) are formed as a mesh.

7. Flexible polymer multilayer reinforced pipe according to any of the preceding claims, **characterised in that** the outer layer (4) is distinguished by absence of cracking on exposure to 135°C for at least 200 days.

8. Flexible polymer multilayer reinforced pipe according to any of the preceding claims, **characterised in that** the polypropylene based composition of which the outer layer (4) is made contains, as antioxidants, a combination of sterically hindered phenol and sterically hindered phosphite, or a combination of sterically hindered phenol, sterically hindered phosphite and a thiosynergist, or a combination of sterically hindered phenol, sterically hindered phosphite and sterically hindered amine, or a combination of sterically hindered phenol and a thiosynergist.

9. Flexible polymer multilayer reinforced pipe according to any of the preceding claims, **characterised in that** the polypropylene based composition of which the cover layer (7) is made contains, as antioxidants, a combination of sterically hindered phenol and sterically hindered phosphite, or a combination of sterically hindered phenol, sterically hindered phosphite and a thiosynergist, or a combination of sterically hindered phenol, sterically hindered phosphite and sterically hindered amine, or a combination of sterically hindered phenol and a thiosynergist.

10. Flexible polymer multilayer reinforced pipe according to any of the preceding claims, **characterised in that** it is provided with an outer protective casing (9) covering the cover layer (7).

11. Flexible polymer multilayer reinforced pipe according to any of the preceding claims, **characterised in that** the reinforcing layer or layers (6) are made of para-aramid homopolymer fibre or para-aramid copolymer fibre.

12. Flexible polymer multilayer reinforced pipe according to any of the preceding claims, **characterised in that** the pipe (1) is provided with a gas barrier layer (11) and/or a thermal insulation layer (10) arranged between the outer protective casing (9) and the cover layer (7).

13. Flexible polymer multilayer reinforced pipe according to any of the preceding claims, **characterised in that** it is provided with one or more adhesive layers (12, 13).

14. Flexible polymer multilayer reinforced pipe according to any of the preceding claims, **characterised in that** the outer and the inner layers have the same thickness.

15. Use of the flexible polymer multilayer reinforced pipe according to any of the preceding claims for heat supply, for transportation of media at variable temperature up to 135°C and pressure exceeding 0.4 MPa.

## Patentansprüche

1. Flexibles polymerverstärktes Rohr (1), das eine innere Schale (2), eine oder mehrere darauf angeordnete Verstärkungsschichten (6) und eine über allen Verstärkungsschichten (6) angeordnete Deckschicht (7) umfasst, wobei die innere Schale (2) eine innere Schicht (3) aus einer auf Polyphenylensulfid basierenden Zusammensetzung und eine äußere Schicht (4) umfasst, wobei die innere und die äußere Schicht (4) aus einer Polyphenylensulfidzusammensetzung bestehen, die äußeren Schichten (3, 4) durch eine Zwischenschicht (5) miteinander verbunden sind, **dadurch gekennzeichnet, dass** die Zusammensetzung auf der Basis von Polyphenylensulfid, aus der die innere Schicht (3) hergestellt ist, einen Elastizitätsmodul zwischen 1,0 und 2,5 GPa hat, die Außenschicht (4) und die Deckschicht (7) des Mehrschichtrohrs (1) aus einer mit Antioxidantien stabilisierten Zusammensetzung auf Polypropylenbasis hergestellt sind und die Zwischenschicht (5) aus einer Polypropylen-Zusammensetzung, die funktionelle Gruppen enthält, die gegenüber dem Polyphenylensulfid reaktiv sind, das in der Zusammensetzung enthalten ist, aus der die innere Schicht (3) besteht.

2. Flexibles, mehrschichtverstärktes Polymerrohr nach Anspruch 1, **dadurch gekennzeichnet, dass** die auf Polyphenylensulfid basierende Zusammensetzung, aus der die innere Schicht (3) hergestellt ist, einen Schlagzähigkeitsmodifikator in einer Menge zwischen 5,0 % (w/w) und 25,0 % (w/w) enthält.

3. Flexibles, mehrschichtig verstärktes Polymerrohr nach Anspruch 2, **dadurch gekennzeichnet, dass** ein Olefinhomopolymer oder -copolymer, das funktionelle Gruppen aus der Klasse der Epoxide enthält die oder Imine oder Isocyanate als Schlagzähigkeitsmodifikator der Zusammensetzung auf Polyphenylensulfidbasis, aus der die Innenschicht (3) hergestellt ist, verwendet wird.

4. Flexibles, mehrschichtverstärktes Polymerrohr nach Anspruch 2, **dadurch gekennzeichnet, dass** der Schlagzähmodifikator in der Zusammensetzung auf Polyphenylensulfidbasis, aus der die Innenschicht (3) besteht aus einem Gemisch aus einem Olefinhomopolymer oder -copolymer mit funktionellen Gruppen aus der Klasse der Epoxide oder Imine oder Isocyanate und einem Elas- tomer, ausgewählt aus der Gruppe: Polyamid-Ether-Copolymer, Polyamid-Ester-Copolymer, Ethylen-Propylen-Copolymer, Ethylen-1-Buten-Copolymer, Ethylen-1-Butylen-Copolymer, Ethylen-1-Butylen-Copolymer, Ethylen-1-Butylen-Copolymer, Ethylen-1-Butylen-Copolymer, Ethylen-1-Butylen-Copolymer, Ethylen-1-Butylen-Copolymer, Ethylen-1-Octen-Copolymer, ein Ethylen-Propylen-Butadien-Terpolymer, ein hydrogeneriertes Styrol-Ethylen-Blockcopolymer (SEBS).

5. Flexibles, mehrschichtverstärktes Polymerrohr nach einem der vorhergehenden Ansprüche, **dadurch gekennzeichnet, dass** als funktionelle Gruppen der Zusammensetzung der Zwischenschicht (5) funktionelle Gruppen aus der Klasse der Isocyanate oder Imine oder Epoxide verwendet werden.

6. Flexibles polymerverstärktes Rohr nach einem der vorhergehenden Ansprüche, **dadurch gekennzeichnet, dass** die Verstärkungsschicht oder -schichten (6) als Netz ausgebildet sind.

7. Flexibles polymerverstärktes Rohr nach einem der vorhergehenden Ansprüche, **dadurch gekennzeichnet, dass** die äußere Schicht (4) sich dadurch auszeichnet, dass sie bei einer Einwirkung von 135°C während mindestens 200 Tagen keine Risse aufweist.

8. Flexibles, mehrschichtiges, polymerverstärktes Rohr nach einem der vorhergehenden Ansprüche, **dadurch gekennzeichnet, dass** die Zusammensetzung auf Polypropylenbasis, aus der die äußere Schicht (4) hergestellt ist, als Antioxidantien eine Kombination aus sterisch gehindertem Phenol und sterisch gehindertem Phosphit oder eine Kombination aus sterisch gehindertem Phenol, sterisch gehindertem Phosphit und einem Thiosynergisten oder eine Kombination aus sterisch gehindertem Phä- nol, sterisch gehindertem Phosphit und sterisch gehindertem Amin oder eine Kombination aus sterisch gehindertem Phenol und einem Thiosynergisten enthält.

9. Flexibles polymerverstärktes Rohr nach einem der vorhergehenden Ansprüche, **dadurch gekennzeichnet, dass** die Zusammensetzung auf Polypropylenbasis, aus der die Deckschicht (7) hergestellt wird, enthält als Antioxidantien eine Kombination aus sterisch gehindertem Phenol und sterisch gehindertes Phosphit, oder eine Kombination aus sterisch gehindertem Phenol, sterisch gehindertem Phosphit und einem Thiosynergisten, oder eine Kombination aus sterisch gehindertem Phä- nol, sterisch gehindertem Phosphit und sterisch gehindertem Amin, oder eine Kombination aus sterisch gehindertem Phenol und einem Thiosynergisten.

10. Flexibles polymerverstärktes Rohr nach einem der vorhergehenden Ansprüche, **dadurch gekennzeichnet, dass** es mit einer äußeren Schutzhülle (9) versehen ist, die die Deckschicht (7) bedeck.

11. Flexibles polymerverstärktes Rohr nach einem der vorhergehenden Ansprüche, **dadurch gekennzeichnet, dass** die Verstärkungsschicht oder -schichten (6) aus para-Aramid-Homopolymerfasern oder para-Aramid-Copolymerfasern hergestellt sind.

12. Flexibles polymerverstärktes Rohr nach einem der vorhergehenden Ansprüche, **dadurch gekennzeichnet, dass** das Rohr (1) mit einer Gassperrschicht (11) und/oder einer Wärmedämmschicht (10) versehen ist, die zwischen der äußeren Schutzhülle (9) und der Deckschicht (7) angeordnet ist.

13. Flexibles polymerverstärktes Rohr nach einem der vorhergehenden Ansprüche, **dadurch gekennzeichnet, dass** es mit einer oder mehreren Klebeschichten (12, 13) versehen ist.

14. Flexibles mehrschichtverstärktes Polymerrohr nach einem der vorhergehenden Ansprüche, **dadurch gekennzeichnet, dass** die äußere und die innere Schicht die gleiche Dicke haben.

15. Verwendung des flexiblen polymerverstärkten Rohres nach einem der vorhergehenden Ansprüche zur Wärmeversorgung, zum Transport von Medien mit variabler Temperatur bis zu 135°C und einem Druck von mehr als 0,4 MPa.

## Revendications

1. Tube flexible renforcé par un polymère (1) comprenant une coque interne (2), une ou plusieurs couches de renforcement (6) disposées sur celle-ci et une couche de couverture (7) disposée sur toutes les couches de renforcement (6). la coque interne (2) comprenant une couche interne (3) d'une composition à base de sulfure de polyphénylène et une couche externe (4), les couches interne et externe (4) étant constituées d'une composition à base de sulfure de polyphénylène, les couches externes (3, 4) étant reliées l'une à l'autre par une couche intermédiaire (5), **caractérisé en ce que** la composition à base de sulfure de polyphénylène à partir de laquelle la couche interne (3) est réalisée, a un module d'élasticité compris entre 1,0 et 2,5 GPa, la couche extérieure (4) et la couche de couverture (7) du tube multicouche (1) sont réalisées à partir d'une composition à base de polypropylène stabilisée par des antioxydants et la couche intermédiaire (5) est réalisée à partir d'une composition de polypropylène contenant des groupes fonctionnels réactifs vis-à-vis du poly(sulfure de phénylène) contenu dans la composition constituant la couche intérieure (3).

2. Tube polymère flexible renforcé par plusieurs couches selon la revendication 1, **caractérisé en ce que** la composition à base de poly(sulfure de phénylène) à partir de laquelle la couche interne (3) est fabriquée contient un modificateur de résistance au choc en une quantité comprise entre 5,0 % (p/p) et 25,0 % (p/p).

3. Tube polymère flexible renforcé multicouche selon la revendication 2, **caractérisé en ce qu'**un homopolymère ou un copolymère d'oléfine contenant des groupes fonctionnels de la classe des époxydes, ou des imines ou des isocyanates, est utilisé comme modificateur de la résistance aux chocs de la composition à base de poly(sulfure de phénylène) à partir de laquelle la couche interne (3) est fabriquée.

4. Tube polymère flexible renforcé multicouche selon la revendication 2, **caractérisé en ce que** le modificateur d'impact dans la composition à base de poly(sulfure de phénylène) dont est constituée la couche interne (3) est constitué d'un mélange d'un homopolymère ou copolymère oléfinique comportant des groupes fonctionnels de la classe des époxydes ou des imines ou des isocyanates et d'un élastomère choisi dans le groupe : Copolymère polyamide-éther, copolymère polyamide-ester, copolymère éthylène-propylène, copolymère éthylène-1-butène, copolymère éthylène-1-butylène, copolymère éthylène-1-butylène, copolymère éthylène-1-butylène, copolymère éthylène-1-butylène, copolymère éthylène-1-butylène, copolymère éthylène-1-butylène , copolymère éthylène-1-octène, un terpolymère éthylène-propylène-butadiène, un copolymère bloc styrène-éthylène hydrogéné (SEBS).

5. Tube polymère flexible renforcé par plusieurs couches selon l'une des revendications précédentes, **caractérisé en ce que** l'on utilise comme groupes fonctionnels de la composition de la couche intermédiaire (5) des groupes fonctionnels de la classe des isocyanates ou des imines ou des époxydes.

6. Tube flexible renforcé par des polymères selon l'une des revendications précédentes, **caractérisé en ce que** la ou les couches de renforcement (6) sont réalisées sous forme de filet.

7. Tube flexible renforcé par des polymères selon l'une quelconque des revendications précédentes, **caractérisé en ce que** la couche externe (4) se **caractérise par** l'absence de fissuration sous une exposition à 135°C pendant au moins 200 jours.

8. Tube flexible multicouche renforcé par un polymère selon l'une quelconque des revendications précédentes, **caractérisé en ce que** la composition à base de polypropylène à partir de laquelle la couche externe (4) est fabriquée contient, en tant qu'antioxydants, une combinaison de phénol stériquement encombré et de phosphite stériquement encombré ou une combinaison de phénol stériquement encombré et de phosphite stériquement encombré, ou une combinaison de phénol stériquement encombré, de phosphite stériquement encombré et d'amine stériquement encombrée ou une combinaison de phénol stériquement encombré et d'un thiosynergiste.

9. Tube flexible renforcé par un polymère selon l'une quelconque des revendications précédentes, **caractérisé en ce que** la composition à base de polypropylène à partir de laquelle la couche de recouvrement (7) est réalisée contient, en tant qu'antioxydants, une combinaison de phénol à empêchement stérique et de phosphite à empêchement stérique, ou une combinaison de phénol stériquement encombré, de phosphite stériquement encombré et d'un thiosynergiste, ou une combinaison de phé- nol stériquement encombré, de phosphite stériquement encombré et d'amine stériquement encombrée, ou une combinaison de phénol stériquement encombré et d'un thiosynergiste.

10. Tube flexible renforcé par des polymères selon l'une quelconque des revendications précédentes, **caractérisé en ce qu'**il est pourvu d'une gaine de protection extérieure (9) qui recouvre la couche de recouvrement (7).

11. Tube flexible renforcé par des polymères selon l'une quelconque des revendications précédentes, **caractérisé en ce que** la ou les couches de renforcement (6) sont réalisées en fibres d'homopolymère de para-aramide ou en fibres de copolymère de para-aramide.

12. Tube flexible renforcé par des polymères selon l'une des revendications précédentes, **caractérisé en ce que** le tube (1) est pourvu d'une couche de barrière aux gaz (11) et/ou d'une couche de barrière thermique (10) disposée entre la gaine de protection extérieure (9) et la couche de couverture (7).

13. Tube flexible renforcé par des polymères selon l'une quelconque des revendications précédentes, **caractérisé en ce qu'**il est pourvu d'une ou plusieurs couches adhésives (12, 13).

14. Tube polymère flexible renforcé multicouche selon l'une quelconque des revendications précédentes, **caractérisé en ce que** les couches extérieure et intérieure ont la même épaisseur.

15. Utilisation du tube flexible renforcé par un polymère selon l'une des revendications précédentes pour la fourniture de chaleur, pour le transport de fluides à température variable jusqu'à 135°C et à une pression supérieure à 0,4 MPa.
